# EUROPÄISCHE PATENTANMELDUNG

(11) **EP 0 751 479 A2**
(43) Veröffentlichungstag der Anmeldung: **02.01.1997**
(21) Anmeldenummer: 96108910.9
(22) Anmeldetag: 04.06.1996
(51) Int. Cl.: G06K 19/14

(54) **Chip-Karte**

(30) Priorität: 30.06.1995 DE 19523916
(71) Anmelder: TEMIC TELEFUNKEN microelectronic GmbH, 74072 Heilbronn (DE)
(72) Erfinder: Schairer, Werner, Dr., Weinsberg 74189 (DE)
(74) Vertreter: Maute, Hans-Jürgen, Dipl.-Ing.

(57) **Zusammenfassung**

Chip-Karte, insbesondere PCMCIA-Karte mit Sender-Empfänger-Baustein zur Infrarot-Datenübertragung, wobei der IR-Sender-Empfänger-Baustein in einen Standard-Stecker vollständig integriert wird und die äußeren baulichen Bestandteile, insbesondere die Abmaße von Chip-Karte, Stecker und Leiterplatte, nicht verändert werden.

## Beschreibung

Die Erfindung betrifft Chip-Karten, insbesondere PCMCIA-Karten, gemäß dem Oberbegriff des Patentanspruchs 1.

Chip-Karten sind von der Personal Computer Memory Card International Association im "PC Card Standard", Release 2.0, USA, Sept. 1991 einschließlich der Steckverbinder "Socket Services Interface Specification", Release 1.01, USA, Sept. 1991 normiert.

Chip-Karten wurden zunächst zur Erweiterung der Speicherkapazität von Computern, insbesondere Laptops, konzipiert, sind z. B. aus der US 5,061,845 bekannt.

Darüber hinaus werden über die computerseitige PCMCIA-Schnittstelle auch Daten an periphere Geräte, z. B. Faxmodems, andere PCs, Drucker u.ä., übertragen, indem eine Kopplungselektronik in das Gehäuse der Chip-Karte eingesetzt wird. Diese Karten werden aufgrund ihrer Funktion als Chip-Erweiterungskarten bezeichnet, in Abgrenzung zu den Chip-Speicherkarten. Die Chip-Erweiterungskarten haben somit nicht nur eine PC-seitige Steckerverbindung, sondern auch eine äußere Steckerverbindung zum Anschluß der peripheren Geräte bzw. anderer PCs.

Bekannt ist außerdem die drahtlose Datenübertragung, z. B. mittels Infrarot-Sender-Empfänger-Bausteinen, wie in US 5 247 380 beschrieben. In US 5 343 319 wird ein Gerät zur Adaption eines elektrischen Kommunikationsanschlusses mit einem optischen Infrarot-Sender-Empfänger-Baustein beschrieben, wobei die besondere Bedeutung der PCMCIA-Schnittstelle deutlich wird.

Aufgabe der Erfindung ist es, einen Sender-Empfänger-Baustein zur IR-Datenübertragung möglichst einfach mit einer Chip-Karten-Schnittstelle, vorzugsweise der PCMCIA-Schnittstelle, zu koppeln.

Die Aufgabe ist durch die kennzeichnenden Merkmale der Patentansprüche 1 und 2 gelöst, indem der Sender-Empfänger-Baustein in den Stecker bzw. das Abschlußteil der Chip-Karte integriert wird.

Dadurch kann das Herausragen von Bauteilen aus dem PC-Gehäuse vermieden werden, da die Chip-Karte vollständig im Schacht eingeführt werden kann. Es sind keinerlei zusätzliche Geräte außerhalb des PC-Gehäuses notwendig. Die Chip-Karte mit Sender-Empfänger-Baustein zur IR-Datenübertragung bleibt, insbesondere gegenüber einem Festeinbau im PC-Gehäuse, als Modul leicht austauschbar.

Durch die Integration des Sender-Empfänger-Bausteins in den Stecker können zudem alle Standards in PCMCIA-Karten beibehalten werden.
Die Produktion einer solchen Chip-Karte ist mit bekannten Technologien automatisierbar und durch Beibehaltung nahezu aller konstruktiven Maße im Inneren und Äußeren der Chip-Karte auf vorhandenen Maschinen und Anlagen durchführbar.

Darüber hinaus ist die Chip-Karte durch ihren bewußt modular gewählten Aufbau und eine einheitliche Anschlußebene vielseitig anpaßbar.

Vorteilhafte Weiterbildungen sind in den Patentansprüchen 3 bis 10 ge-geben.

Die Erfindung soll nachfolgend anhand von Ausführungsbeispielen bezugnehmend auf die Figuren näher erläutert werden.

Es zeigen:
- Figur 1: Chip-Karte mit Sender-Empfänger-Baustein zur IR-Datenüber tragung
- Figur 2: geöffnete Chip-Karte gemäß PCMCIA-Norm mit äußerem Stec ker mit Sender-Empfänger-Baustein zur IR-Datenübertragung in modularer Bauweise und entsprechenden Funktions- und Kontaktierebenen

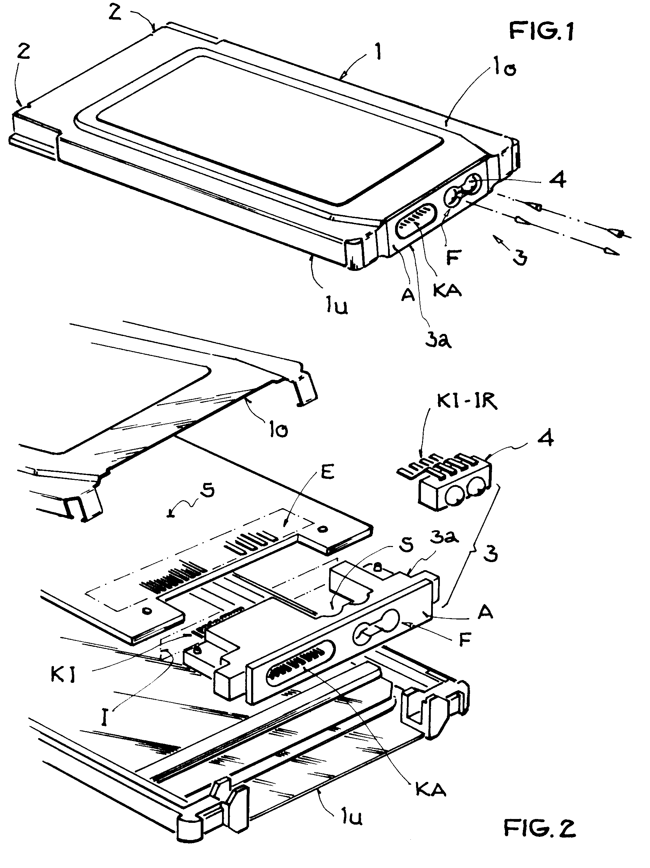

Figur 1 zeigt eine Chip-Karte, bestehend aus einem Gehäuse 1 aus Ober- und Unterseite (1o,1u), einem inneren Stecker 2, der die Chip-Karte mit dem Computer verbindet, und einem äußeren Stecker 3, der eine äußere Funktionsfläche A aufweist, in die elektromechanische Kontaktelemente KA Sowie ein Fenster F zur IR-Datenübertragung integriert sind. Die äußeren elektromechanischen Kontaktelemente KA dienen zum Anschluß peripherer Geräte mit konventionellen Steckverbindern, das Fenster F zur IR-Datenübertragung mittels dahinter befindlichem Sender-Empfänger-Baustein 4. Die konstruktive Anordnung von Kontaktelementen KA und Fenster F ist dabei spezifisch anpaßbar. Insbesondere sind mehrere Kontaktelemente KA denkbar, die dann rechts oder links von dem Fenster F angeordnet sein können. Es ist einzig darauf zu achten, daß der Strahlengang des Sender-Empfänger-Bausteins 4, wie in Figur 1 angedeutet, nicht durch äußere Steckverbinder oder deren Anschlußleitungen verdeckt wird. Die Chip-Karte wird in den PC derart eingeführt, daß die Funktionsfläche A mit dem PC-Gehäuse in einer Ebene abschließt, wie bei Chip- und insbesondere PCMCIA-Karten üblich.

In Figur 2 ist eine Chip-Karte gemäß PCMCIA-Norm dargestellt. Es ist das Gehäuse 1 geöffnet in Oberseite 1o und Unterseite 1u, welche mit Haken in der Oberseite 1o geschlossen werden können. Im Inneren der PCMCIA-Karte ist der äußere Stecker 3 in modularer Bauweise dargestellt. Dieser weist, wie oben beschrieben, äußere Kontaktelemente KA auf, die elektrisch mit inneren Kontaktelementen KI verbunden sind, welche zur Kontaktierung mit der Leiterplatte 5 an der Kontaktierebene E dienen. Für den Sender-Empfänger-Baustein 4 zur IR-Datenübertragung ist eine Aussparung S vorgesehen, in die er paßgenau einrastet. Die inneren Kontaktelemente des Sender-Empfänger-Bausteins KI-IR sind derart ausgerichtet, daß sie analog zu den konventionellen Kontaktelementen KI auf die Kontaktierebene E gerichtet sind. Die konstruktive Gestaltung des Steckerkörpers 3a ist dabei einzig in den Außenmaßen durch die PCMCIA definiert, spezielle Aufnehmer für den Sender-Empfänger-Baustein 4, wie zum Beispiel eine Schiene zum Einrasten des Bausteins 4 evt. mit den Kontaktelementen KI-IR, die dann federnd ausgeführten sein könnten, ist denkbar. Im Äußeren ist der Stecker 3 und der Steckerkörper 3a von der PCMCIA definiert und weist konstruktive Elemnte auf, die den Stecker 3 in der Unterseite 1u mechanisch belastbar verankern und den Stecker 3 mit der Leiterplatte 5 mechanisch verbinden. Die spezifische Ausführung der inneren Funktionsfläche I, bestehend aus den Kontaktelementen KI und KI-IR, insbesondere die Anordnung bezüglich der Leiterplatte 5, ist frei anpaßbar.
Dadurch wird eine einheitliche Anschlußebene E definiert, was Vorteile für eine automatisierte Fertigung hat, da dadurch für die Kontaktierung der inneren Kontaktelemente KI des Steckers und der Kontaktelemente KI-IR des Sender-Empfänger-Bausteins 4 zur IR-Datenübertragung eine Vielzahl einfach automatisierbarer Kontaktierverfahren zur Verfügung stehen, wobei die Anordnung der Ebene E auf der Ober- bzw. Unterseite der Leiterplatte erfolgen kann, da jeweils nur Leiterplatte und Stecker um 180° Grad gedreht werden müssen und dann die Verbindung analog erfolgen kann.
In Figur 2 wurde die Ausführung derart gewählt, daß die inneren Kontaktelemente KI und KI-IR auf der Kontaktierebene E der Leiterplatte 5 gemeinsam und in einem Arbeitsgang mittels einer bevorzugten Verbindungstechnik von Stecker und Leiterplatte, Lötverfahren auf Basis der Oberflächenmontagetechnik (SMT Surface Mount Technology), durchgeführt werden kann, da sich diese mit der Verlötung der Bauelemente auf der Leiterplatte, meist SMT-Bauteile, verknüpfen lassen und technologisch gut beherrscht werden.

Sollen bei der automatischen Montage Saugwerkzeuge zur Bestückung eingesetzt werden, so kann der Sender-Empfänger-Bausteins 4 mit der flachen Seite nach oben in die Aussparung S eingesetzt werden, wobei eine entsprechende Anpassung an die Ebene E zum Anschluß an die Leiterplatte 5 möglich ist.

Die Ausführung des Fensters F kann offen oder mit IR-transparentem Material abgedeckt ausgeführt werden, wobei ersteres eine niedrigere Dämpfung hat, zweiteres einen Schutz gegen Schmutz und Feuchtigkeit darstellt und eine leichte Reinigung ermöglicht.

Bei vollständiger Umsetzung des Prinzips der drahtlosen Datenübertragung mittels IR-Datenübertragung kann die Chip-Karte ohne äußere Kontaktelemente KA Einsatz finden.
Neben der modularen Bauweise des Steckers 3, gegliedert in Steckerkörper 3a, inneren und äußeren Kontaktelementen KA, KI und KI-IR und Sender-Empfänger-Baustein 4 zur IR-Datenübertragung, kann der Stecker auch in einem mittels einer Gieß- oder Pressmasse, die dann sich zum Steckerkörper 3a verfestigt, vergossen oder verpreßt und so als ein Baute ausgeführt werden.

## Patentansprüche

1. Chip-Karte, insbesondere PCMCIA-Karte mit einem Gehäuse (1) aus Ober- und Unterseite (1o, 1u), einem inneren Chip-Stecker (2), einem äußeren Chip-Stecker (3) zum Anschluß peripherer Geräte, bestehend aus einem Steckerkörper (3a), der in die Ober- und Unterseite (1o, 1u) der Chip-Karte einrastet und eine äußere Funktionsfläche (A) mit entsprechenden Kontaktelementen (KA) und eine innere Funktionsfläche (I), die Kontaktelemente (KI) aufweist, sowie mit einem Infrarot-Sender-Empfänger-Baustein (4) zur optischen Datenübertragung, dadurch gekennzeichnet, daß der Infrarot-Sender-Empfänger-Baustein (4) in den äußeren Standard-Stecker (3) integriert wird.

2. Chip-Karte, insbesondere PCMCIA-Karte mit einem Infrarot-Sender-Empfänger-Baustein (4) zur optischen Datenübertragung in einem Gehäuse (1) aus Ober- und Unterseite (1o, 1u) und einem inneren Chip-Stecker (2), dadurch gekennzeichnet, daß die Chip-Karte mit einem Abschlußteil, bestehend aus einem Steckerkörper (3a), der in die Ober- und Unterseite (1o, 1u) der Chip-Karte einrastet, ausgeführt ist und in dieses Abschlußteil der Infrarot-Sender-Empfänger-Baustein (4) zur optischen Datenübertragung integriert wird.

3. Chip-Karte, insbesondere PCMCIA-Karte gemäß Anspruch 1, dadurch gekennzeichnet, daß die Kontaktelemente (KI) der inneren Funktionsfläche (I) einschließlich der für die IR-Datenübertragung notwendigen auf einer Ebene (E) parallel zur Leiterplatte (5) angeordnet sind, so daß sie diese berühren.

4. Chip-Karte, insbesondere PCMCIA-Karte gemäß der Ansprüche 1 oder 3, dadurch gekennzeichnet, daß die Kontaktelemente (KI) mittels Steckverbindung mit der Leiterplatte verbunden sind.

5. Chip-Karte, insbesondere PCMCIA-Karte gemäß der Ansprüche 1 oder 3, dadurch gekennzeichnet, daß die Kontaktelemente (KI) als Federkontakte ausgeführt sind.

6. Chip-Karte, insbesondere PCMCIA-Karte gemäß der Ansprüche 1 oder 3, dadurch gekennzeichnet, daß die Kontaktelemente (KI) mittels Oberflächenmontage-(Surface-Mount)-Technologie mit der Leiterplatte (5) verlötet werden.

7. Chip-Karte, insbesondere PCMCIA-Karte gemäß Anspruch 6, dadurch gekennzeichnet, daß beim äußeren Standard-Stecker (3) in der äußeren Funktionsfläche (A) ein Fenster (F) vorgesehen ist, welches offen oder mit IR-transparentem Material abgedeckt ausgeführt werden kann.

8. Chip-Karte, insbesondere PCMCIA-Karte gemäß der Ansprüche 5 bis 6, dadurch gekennzeichnet, daß eine Aussparung (S) im Steckerkörper (3a) des äußeren Steckers (3) vorgesehen sind, so daß der Sender-Empfänger-Baustein (4) in den Steckerkörper (3a) paßgenau einrastet und die Kontaktelemente (KI-IR) des IR-Bausteins (4) auf der Anschlußebene (E) enden.

9. Verfahren zur Herstellung einer Chip-Karte gemäß der Ansprüche 1,3 und 4, dadurch gekennzeichnet, daß der Infrarot-Sender-Empfänger-Baustein (4) vor der Verlötung des äußeren Steckers (3) der Chip-Karte mit der Leiterplatte (5) in den Steckerkörper (3a) eingerastet wird.

10. Verfahren zur Herstellung einer Chip-Karte gemäß der Ansprüche 1, 3 und 4, dadurch gekennzeichnet, daß der äußere Stecker (3) der Chip-Karte mit den Kontaktelementen (KA und KI) und dem Infrarot-Sender-EmpfängerBaustein (4) in einem Arbeitsgang als einheitliche Baugruppe mit einer Steckerkörpermasse vergossen oder verpresst wird und danach mit der Leiterplatte verbunden wird.
